(19) Europäisches Patentamt
European Patent Office
Office européen des brevets

(11) **EP 3 405 341 B1**

(12) **EUROPÄISCHE PATENTSCHRIFT**

(45) Veröffentlichungstag und Bekanntmachung des Hinweises auf die Patenterteilung:
**26.05.2021   Patentblatt 2021/21**

(21) Anmeldenummer: **17700550.1**

(22) Anmeldetag: **18.01.2017**

(51) Int Cl.:
**B32B 15/08** (2006.01)     **B32B 27/04** (2006.01)
**B32B 27/12** (2006.01)     **B32B 15/088** (2006.01)
**B32B 15/18** (2006.01)     **B32B 15/20** (2006.01)
**B32B 27/34** (2006.01)

(86) Internationale Anmeldenummer:
**PCT/EP2017/050955**

(87) Internationale Veröffentlichungsnummer:
**WO 2017/125420 (27.07.2017 Gazette 2017/30)**

(54) **SCHICHTVERBUND, AUFGEBAUT AUS EINER ERSTEN SCHICHT AUS EINEM ERSTEN MATERIAL UND EINER ZWEITEN SCHICHT AUS EINEM MIT ENDLOSFASERN VERSTÄRKTEN POLYMER**

LAYERED COMPOSITE COMPOSED OF A FIRST LAYER OF A FIRST MATERIAL AND A SECOND LAYER OF A POLYMER REINFORCED WITH CONTINUOUS FIBRES

COMPOSITE EN COUCHE, CONSTITUE D'UNE PREMIERE COUCHE D'UN PREMIER MATERIAU ET D'UNE SECONDE COUCHE D'UN POLYMERE RENFORCE DE FIBRES CONTINUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2016   EP 16152394**

(43) Veröffentlichungstag der Anmeldung:
**28.11.2018   Patentblatt 2018/48**

(73) Patentinhaber: **BASF SE**
**67056 Ludwigshafen am Rhein (DE)**

(72) Erfinder:
• **JAKOBI, Reinhard**
**67133 Maxdorf (DE)**

• **NIXDORF, Andreas**
**68159 Mannheim (DE)**
• **LOEHNER, Linus Niklas**
**67067 Ludwigshafen am Rhein (DE)**

(74) Vertreter: **BASF IP Association**
**BASF SE**
**GBI-C006**
**67056 Ludwigshafen (DE)**

(56) Entgegenhaltungen:
**DE-A1-102011 114 362**

**Beschreibung**

Die Erfindung geht aus von einem Schichtverbund, aufgebaut aus einer ersten Schicht aus einem ersten Material und einer zweiten Schicht aus einem mit Endlosfasern verstärkten Polymer, wobei die erste Schicht und die zweite Schicht flächig, bevorzugt stoffschlüssig, miteinander verbunden sind.

Schichtverbunde mit einer ersten Schicht aus einem ersten Material, insbesondere einem Metall, und einer zweiten Schicht aus einem mit Endlosfasern verstärkten Polymer, die flächig miteinander verbunden sind, werden zum Beispiel eingesetzt als Ersatz für Metallbauteile, um die Bauteile bei gleicher Festigkeit und/oder Steifigkeit mit einer geringeren Masse realisieren zu können.

Eine Reduktion des Gewichts nur durch Verwendung von dünneren Blechteilen hat den Nachteil, dass hierdurch die Stabilität verringert wird. So kommt dünnes Blech aufgrund der geringen Wanddicke an seine Grenzen bezüglich der Beulsteifigkeit. Es sind zum Beispiel bei Einsatz einer reinen Stahlhaut Mindestdicken von 0,5 bis 0,8 mm notwendig und beim Einsatz einer reinen Aluminiumhaut Dicken von 0,8 bis 1,2 mm, um ein Beulen zu verhindern. In beulgefährdeten Bereichen sind also zur weiteren Reduzierung der Blechdicken lokale Verstärkungen sinnvoll, die zum Beispiel durch Verbindung des Blechs mit einem faserverstärkten Polymermaterial realisiert werden können.

Nachteil der Verstärkung eines Blechteils mit einem faserverstärkten Polymermaterial ist die unterschiedliche thermische Ausdehnung. Bei faserverstärkten Polymermaterialien kommt dazu, dass diese aufgrund der Faserausrichtung anisotrope Eigenschaften aufweisen, was bei der thermischen Ausdehnung dazu führt, dass sich die Ausdehnung des Materials längs der Faserrichtung von der quer zur Faserrichtung unterscheidet. Bei den bekannten faserverstärkten Kunststoffen, die Fasern enthalten, die in mehrere Richtungen ausgerichtet sind, können aufgrund der unterschiedlichen thermischen Ausdehnungskoeffizienten längs zur Faserrichtung und quer dazu bei Temperaturdifferenzen Verformungen auftreten, die sich von der freien Verformung einer Einzelschicht mit nur einer Faserrichtung bei Temperaturbeanspruchung unterscheiden. Im Verbund können diese Einzelschichten durch die gegenseitige Fügung im Allgemeinen ihre thermischen Dehnungen nicht frei ausbilden und es kommt zur Entstehung thermischer Eigenspannungen. Thermische Eigenspannungen können dabei immer vorliegen, sobald die Einsatztemperatur des Verbunds sich von seiner üblicherweise spannungsfreien Herstelltemperatur unterscheidet. Je nach Aufbau des Verbundes und äußeren Lagerungsbedingungen können thermische Eigenspannungen insbesondere einen unzulässig großen Verzug bewirken.

Die unterschiedliche thermische Ausdehnung der unterschiedlichen Materialien ist insbesondere bei Karosserie-Bauteilen von Kraftfahrzeugen problematisch, da diese bereits bei der Lackierung hohen Temperaturen von bis zu 200°C ausgesetzt sind und auch im normalen Betrieb Temperaturunterschiede von bis zu 120 K auftreten können. Die unterschiedlichen thermischen Ausdehnungen führen zu inneren Spannungen, die zu einem Versagen des Schichtverbundes führen können und/oder zu Verzug, der unzulässige Deformationen oder Abzeichnungen an der Oberfläche nach sich zieht.

Aus DE-A 10 2006 058 601 ist ein Karosserie- und Fahrwerksteil bekannt, das einen metallischen Grundkörper und ein Verstärkungsteil aus einem Faser-Kunststoff-Verbund aufweist. Der Faser-Kunststoff-Verbund ist mit einem Klebstoff an dem metallischen Grundkörper befestigt. Zum Ausgleich unterschiedlicher thermischer Ausdehnungen wird ein Klebstoff mit geringerem Elastizitätsmodul verwendet, der in einer größeren Schichtdicke aufgetragen werden kann und hierdurch flexibler reagiert als Klebstoffe, die nur eine sehr geringe Schichtdicke aufweisen.

DE-A 10 2010 014 541 hat ein Außenverkleidungsteil für einen Rohbau eines Kraftfahrzeuges zum Gegenstand, wobei das Außenverkleidungsteil ein großflächiges Blechteil ist, an dessen Innenseite zumindest teilweise eine Unterstruktur aus einem faserverstärkten Kunststoff angebracht ist. Die Unterstruktur ist dabei nur partiell mit dem Blechteil verbunden. Um Verformungen des Blechteils aufnehmen zu können, ist die Unterstruktur aus Kunststoff unterbrochen.

Aus DE-A 38 18 478 ist ein Verbundwerkstoff aus einer Metallschicht und einer faserverstärkten Polypropylenschicht bekannt, bei dem der Vernetzungsgrad des Polypropylens und der Anteil an Fasern in der faserverstärkten Polypropylenschicht so eingestellt werden, dass die thermische Ausdehnung der thermischen Ausdehnung des Metalls entspricht. Nachteil des Polymermaterials ist dessen fehlende Recyclierbarkeit, da das Polypropylen vernetzt ist. Zudem ist Polypropylen insbesondere für den Einsatz in Kraftfahrzeugkarosserien nicht geeignet, da dieses bei den im Lackierprozess auftretenden Temperaturen nicht formbeständig ist. Ein weiterer Nachteil ist, dass die aus DE-A 38 18 478 bekannten faserverstärkten Polypropylenschichten mit Wirrfasermatten eine vergleichsweise geringe Steifigkeit aufweisen.

Aus DE 10 2011 114 362 A1 ist ein Verbundmaterial aus wenigstens einer Kunststoffschicht und wenigstens einer Elastomerschicht bekannt.

Aufgabe der vorliegenden Erfindung ist es, einen Schichtverbund aus einer ersten Schicht aus einem ersten Material und einer zweiten Schicht aus einem mit Endlosfasern verstärkten Polymer bereitzustellen, der die aus dem Stand der Technik bekannten Nachteile nicht aufweist.

Gelöst wird die Aufgabe durch einen Schichtverbund, aufgebaut aus einer ersten Schicht aus einem ersten Material und einer zweiten Schicht aus einem mit Endlosfasern verstärkten Polymer, wobei die erste Schicht und die zweite Schicht flächig, bevorzugt stoffschlüssig, miteinander verbunden sind, wobei die Endlosfasern in der zweiten Schicht in mindestens drei Faserrichtungen ausgerichtet sind, wobei die drei Faserrichtungen in einer Ebene liegen, die zur ersten Schicht parallel ausgerichtet ist, und der Faseranteil so eingestellt ist, dass der thermische Ausdehnungskoeffizient der zweiten Schicht dem thermischen Ausdehnungskoeffizienten der ersten Schicht entspricht.

Das Material der ersten Schicht ist dabei ein Metall und das mit Endlosfasern verstärkte Polymer weist einen Gesamtfaseranteil im Bereich von 1 bis 70 Vol.-% auf. Zudem ist vorgesehen, dass die zweite Schicht aus mehreren Einzelschichten aus einem faserverstärkten Polymer aufgebaut ist, die jeweils zueinander gedreht sind, oder dass die zweite Schicht mehrere Lagen mit Endlosfasern enthält, wobei die Endlosfasern innerhalb einer Lage in mehreren zueinander gedrehten Faserrichtungen vorliegen.

Durch die Anordnung der Endlosfasern derart, dass diese in mindestens drei Faserrichtungen ausgerichtet sind, lässt sich eine hohe Steifigkeit der zweiten Schicht erhalten, so dass diese zur Verstärkung der ersten Schicht und insbesondere zur Reduzierung der Masse im Vergleich zu einem Bauteil aus nur dem Material der ersten Schicht eingesetzt werden kann. Des Weiteren hat sich überraschenderweise gezeigt, dass bereits bei nur drei Faserrichtungen, welche in einer Ebene parallel zur ersten Schicht verlaufen, quasiisotrope Eigenschaften erzielt werden können, im Rahmen der vorliegenden Erfindung insbesondere hinsichtlich der thermischen Ausdehnung in der Ebene, in der die Fasern liegen.

Für die Einstellung der quasiisotropen Eigenschaften ist es insbesondere erforderlich, dass die Winkel zwischen den zueinander gedrehten Fasern jeweils gleich groß sind. Bei drei Faserrichtungen bedeutet dies, dass die Faserrichtungen jeweils um 60° zueinander gedreht sind. Entsprechend sind die Fasern bei vier Faserrichtungen jeweils um 45° zueinander gedreht. Die Anzahl an Faserrichtungen kann beliebig groß gewählt werden, jedoch ist es bevorzugt, die Anzahl an Faserrichtungen möglichst gering zu halten, insbesondere drei oder vier Faserrichtungen, um die Schichtdicke der zweiten Schicht gering und damit in einem technisch sinnvollen Bereich zu halten.

Unter Endlosfasern im Rahmen der vorliegenden Erfindung werden Filamente verstanden, die endlos gefertigt werden und in der Weiterverarbeitung auf eine endliche Länge gekürzt werden, deren Länge jedoch wesentlich größer ist als die Länge von Langfasern. Langglasfasergranulate enthalten typischerweise Fasern mit Längen zwischen 5 mm und 25 mm. Zum einen kann die Länge der Endlosfaser durch die Bauteilabmessungen begrenzt sein. Zum anderen kann die Länge durch das Halbzeug beschränkt sein, wie es bei Wirrfasermatten (mit ca. 5 cm) der Fall ist. Bevorzugt wird die Länge größtmöglich in Abhängigkeit des Bauteils bzw. des Halbzeugs gewählt, so dass die Länge der Fasern im Wesentlichen den Abmessungen des Bauteils bzw. des Halbzeugs entspricht.

Um die quasiisotropen Eigenschaften in Ebenen parallel zur ersten Schicht zu erhalten, ist es bevorzugt, wenn die Menge an Fasern in jeder der Faserrichtungen um weniger als 5 Vol.-% von der Menge an Fasern in den anderen Faserrichtungen abweicht. Durch die entsprechend geringe Abweichung der Fasern in jeder der Faserrichtungen wird erzielt, dass die Eigenschaften des mit den Endlosfasern verstärkten Polymers in der Ebene, in der die Fasern liegen, in jede Richtung im Wesentlichen gleich sind. Weiter bevorzugt ist es dabei, wenn die Menge an Fasern in jeder der Faserrichtungen um weniger als 2 Vol.-% von der Menge der Fasern in den anderen Faserrichtungen abweicht und insbesondere, wenn die Menge an Fasern in jeder der Faserrichtungen um weniger als 1 Vol.-% von der Menge der Fasern in den anderen Faserrichtungen abweicht. Ganz besonders bevorzugt ist es, wenn die Menge an Fasern in jeder der Faserrichtungen die gleiche ist.

Um die quasiisotropen Eigenschaften in Ebenen parallel zur ersten Schicht zu erhalten, ist es bevorzugt, wenn die Orientierung der Fasern in jeder der Faserrichtungen um weniger als 5° von der vorgesehenen Orientierung abweicht. Durch die entsprechend geringe Abweichung der Orientierung in jeder der Faserrichtungen wird erzielt, dass die Eigenschaften des mit den Endlosfasern verstärkten Polymers in der Ebene, in der die Fasern liegen, in jede Richtung im Wesentlichen gleich sind. Weiter bevorzugt ist es dabei, wenn die Orientierung der Fasern in jeder der Faserrichtungen um weniger als 2° von der vorgesehenen Orientierung abweicht und insbesondere, wenn die Orientierung der Fasern in jeder der Faserrichtungen um weniger als 1° von der vorgesehenen Orientierung abweicht. Ganz besonders bevorzugt ist eine Orientierung der Fasern in jeder der Faserrichtungen, die zwischen allen drei Faserrichtungen den gleichen Winkel einstellt.

Der Gesamtfaseranteil im mit Endlosfasern verstärkten Polymer ist abhängig von der Art der eingesetzten Fasern und dem Material der ersten Schicht. Das mit Endlosfasern verstärkte Polymer weist einen Gesamtfaseranteil im Bereich von 1 bis 70 Vol.-%, insbesondere von 15 bis 65 Vol.-%, auf. Ganz besonders bevorzugt liegt der Gesamtfaseranteil im Bereich von 35 bis 55 Vol.-%. Der Gesamtfaseranteil wird dabei so eingestellt, dass der thermische Ausdehnungskoeffizient des mit Endlosfasern verstärkten Polymers dem Ausdehnungskoeffizienten des Materials der ersten Schicht entspricht. Hierbei gilt ganz allgemein, dass mit Zunahme des Gesamtfaseranteils der thermische Ausdehnungskoeffizient abnimmt.

Wenn als Fasermaterial ein Material gewählt wird, mit dem selbst bei maximalem Gesamtfaseranteil der thermische Ausdehnungskoeffizient des Materials der ersten Schicht nicht erzielt werden kann, ist es möglich, zusätzlich Fasern aus einem oder mehreren anderen Materialien einzusetzen. Dies ist ebenfalls möglich, wenn der Gesamtfaseranteil einen bestimmten Wert nicht unterschreiten oder überschreiten soll. Hierbei werden die Materialien der Fasern so gewählt, dass diese unterschiedliche thermische Ausdehnungskoeffizienten aufweisen, um auf diese Weise den thermischen Ausdehnungskoeffizienten des mit Endlosfasern verstärkten Materials einstellen zu können.

Zusätzlich können sich die verschiedenen Fasermaterialien auch in weiteren Eigenschaften unterscheiden. Beispielsweise können die Elastizitätsmodule der verschiedenen Fasermaterialien unterschiedlich sein. Somit stellen sich neben dem thermischen Ausdehnungskoeffizienten auch weitere Eigenschaften des mit Endlosfasern verstärkten Materials unterschiedlich ein. Um auch bei Einsatz verschiedener Fasermaterialien quasiisotrope Eigenschaften zu erhalten, ist es bevorzugt, wenn bei Einsatz verschiedener Fasermaterialien der Faseranteil eines Fasermaterials in jeder der Faserrichtungen um nicht mehr als 5 Vol.-% vom Faseranteil dieses Fasermaterials der anderen Faserrichtungen abweicht. Weiter bevorzugt ist es, wenn der Anteil eines Fasermaterials um nicht mehr als 2 Vol.-% vom Faseranteil dieses Fasermaterials in den anderen Faserrichtungen abweicht und besonders bevorzugt ist es, wenn der Anteil um nicht mehr als 1 Vol.-% abweicht. Insbesondere ist der Faseranteil jedes Fasermaterials in jeder der Faserrichtungen gleich groß.

Um auch bei Einsatz verschiedener Fasermaterialien quasiisotrope Eigenschaften zu erhalten, ist es bevorzugt, wenn die Orientierung der Fasern in jeder der Faserrichtungen um weniger als 5° von der vorgesehenen Orientierung abweicht. Durch die entsprechend geringe Abweichung der Orientierung in jeder der Faserrichtungen wird erzielt, dass die Eigenschaften des mit den Endlosfasern verstärkten Polymers in der Ebene, in der die Fasern liegen, in jede Richtung im Wesentlichen gleich sind. Weiter bevorzugt ist es dabei, wenn die Orientierung der Fasern in jeder der Faserrichtungen um weniger als 2° von der vorgesehenen Orientierung abweicht und insbesondere, wenn die Orientierung der Fasern in jeder der Faserrichtungen um weniger als 1° von der vorgesehenen Orientierung abweicht. Ganz besonders bevorzugt ist eine Orientierung der Fasern in jeder der Faserrichtungen, die zwischen allen drei Faserrichtungen den gleichen Winkel einstellt.

Um eine möglichst große Steifigkeit der zweiten Schicht aus dem mit Endlosfasern verstärkten Polymer zu erhalten, ist es bevorzugt, wenn die Fasern jeweils in Ebenen parallel zur ersten Schicht ausgerichtet sind. Weiterhin ist es bevorzugt, parallel ausgerichtete Fasern einzusetzen. Hierzu können die Fasern entweder als Gewebe oder als parallel ausgerichtete Endlosfasern in dem mit Endlosfasern verstärkten Polymer enthalten sein. Besonders bevorzugt sind die Fasern parallel ausgerichtete Endlosfasern.

Wenn die Fasern als parallel ausgerichtete Endlosfasern eingesetzt werden, so ist es zum Beispiel möglich, sogenannte Tapes zu verwenden. In diesen liegen die Endlosfasern parallel ausgerichtet vor und sind mit Polymermaterial getränkt. Sie werden nachfolgend auch als Einzelschicht bezeichnet.

Da in einem Gewebe die Fasern bereits in zwei Faserrichtungen ausgerichtet sind, ist es bei Verwendung eines Gewebes erforderlich, mindestens zwei Gewebelagen einzusetzen, die zueinander gedreht sind. Bei zwei Gewebelagen ergeben sich somit vier Faserrichtungen, so dass die zwei Gewebelagen in einem Winkel von 45° zueinander gedreht sein sollten.

Zur Herstellung der zweiten Schicht ist es möglich, zunächst die Fasern für die zweite Schicht in ein Formwerkzeug einzulegen und anschließend mit dem Polymermaterial zu tränken. In diesem Fall müssen die Fasern für die zweite Schicht in mehrere zueinander gedrehte Faserrichtungen ausgerichtet sein.

In einer Ausführungsform wird die zweite Schicht aus mehreren Einzelschichten aufgebaut, wobei die Einzelschichten jeweils aus einem mit parallel angeordneten Endlosfasern verstärktem Polymer gefertigt sind und die Einzelschichten zueinander gedreht sind, um die Faserausrichtungen zu erhalten. Weiterhin ist es auch möglich, die zweite Schicht aus mehreren Lagen aufzubauen, die bereits Fasern in mindestens drei Faserrichtungen enthalten. In diesem Fall sind die Lagen zueinander gedreht.

Wenn die zweite Schicht aus dem mit Endlosfasern verstärkten Polymer aus mehreren Lagen aufgebaut ist, ist es weiterhin möglich, dass die Lagen jeweils unterschiedliche Faseranteile aufweisen. Wichtig ist in diesem Fall nur, dass jede der Lagen quasiisotrope Eigenschaften aufweist. Der thermische Ausdehnungskoeffizient der zweiten Schicht kann dann durch entsprechende Einstellung des Faseranteils der Lagen eingestellt werden. Unterschiedliche Faseranteile der Lagen können zum einen bedeuten, dass der Gesamtfaseranteil in jeder Lage unterschiedlich ist oder alternativ, dass die Lagen Fasern aus unterschiedlichen Materialien enthalten und die jeweiligen Faseranteile der einzelnen Fasermaterialien in den Lagen unterschiedlich sind.

Neben unterschiedlichen Faseranteilen oder Fasermischungen in den Lagen ist es auch möglich, für jede Lage nur ein einzelnes Fasermaterial vorzusehen und jede Lage mit einem anderen Fasermaterial. In diesem Fall ist es erforderlich, dass jede Lage Fasern enthält, die in mindestens drei Faserrichtungen ausgerichtet sind.

Zusätzlich zu den Lagen mit einem Endlosfasern verstärktem Polymer ist es weiterhin auch möglich, dass die zweite Schicht zusätzlich Zwischenschichten aus einem nicht faserverstärkten Material, z. B. einem unverstärkten Polymer enthält.

Durch den Aufbau aus Einzelschichten und/oder Lagen ergibt sich eine Vielzahl an Parametern, die sich auf den thermischen Ausdehnungskoeffizienten auswirken und somit unmittelbar Einfluss auf den thermischen Verzug haben. Dieser Umstand macht zwar die Einstellung des thermischen Ausdehnungskoeffizienten komplex, bietet jedoch auch einen großen Handlungsspielraum. Der thermische Ausdehnungskoeffizient lässt sich dabei entweder durch geeignete Versuche ermitteln oder alternativ durch eine geeignete Simulationsrechnung, wie sie zum Beispiel in Tsai, S.,

Hahn, H. T., "Introduction to composite Materials", Technomic Publishing Company, Westport, Connecticut, 1980, beschrieben ist. Geeignete Messmethoden werden beispielsweise in dem Standard ISO 11359-2:1999-10 "Kunststoffe - Thermomechanische Analyse (TMA) - Teil 2: Bestimmung des linearen thermischen Ausdehnungskoeffizienten und der Glasübergangstemperatur" beschrieben.

Der thermische Ausdehnungskoeffizient des faserverstärkten Kunststoffs lässt sich zum Beispiel nach folgendem mikromechanischem Modell berechnen:

Für den thermischen Längenausdehnungskoeffizienten längs der Faserorientierung einer unidirektional mit Endlosfasern verstärkten Einzelschicht gilt:

$$\alpha_p = \frac{\alpha_m \cdot E_m \cdot (1-\varphi) + \alpha_{fp} \cdot E_{fp} \cdot \varphi}{E_m \cdot (1-\varphi) + E_{fp} \cdot \varphi} \qquad (1)$$

und quer zur Faserorientierung:

$$\alpha_q = \alpha_m - (\alpha_m - \alpha_{fq}) \cdot \left[ \frac{2(\nu_m^3 + \nu_m^2 - \nu_m - 1)1{,}1 \cdot \varphi}{1{,}1 \cdot \varphi(2\nu_m^2 + \nu_m - 1) - (1+\nu_m)} - \frac{1{,}1 \cdot \varphi \cdot \nu_m \cdot E_{fq}}{1{,}1 \cdot \varphi \cdot E_{fq} + E_m \cdot (1 - 1{,}1 \cdot \varphi)} \right] \qquad (2)$$

wobei $\alpha$ der thermische Längenausdehnungskoeffizient, $E$ der Elastizitätsmodul, $\varphi$ der relative Faservolumenanteil und $\nu$ die Querkontraktionszahl sind und die Indices folgende Bedeutung haben: p parallel zur Faserrichtung, q quer zur Faserrichtung, f Faser und m Matrix.

Für einen mittensymmetrischen Schichtaufbau sind die effektiven thermischen Längenausdehnungskoeffizienten gegeben durch

$$\begin{bmatrix} \alpha_x \\ \alpha_y \\ \alpha_{xy} \end{bmatrix} = A_{ij}^{-1} \cdot \begin{bmatrix} N_x^T (\Delta T = 1K) \\ N_y^T (\Delta T = 1K) \\ N_{xy}^T (\Delta T = 1K) \end{bmatrix} \qquad (3)$$

mit der Scheibensteifigkeitsmatrix

$$A_{ij} = \int_{-h/2}^{h/2} \overline{Q}_{ij} \, dz \qquad (4)$$

und den thermischen Schnittkräften

$$\begin{bmatrix} N_x^T \\ N_y^T \\ N_{xy}^T \end{bmatrix} = \int_{-h/2}^{h/2} \begin{bmatrix} \overline{Q}_{11} & \overline{Q}_{12} & \overline{Q}_{16} \\ \overline{Q}_{12} & \overline{Q}_{22} & \overline{Q}_{26} \\ \overline{Q}_{16} & \overline{Q}_{26} & \overline{Q}_{66} \end{bmatrix} \cdot \begin{bmatrix} \alpha_x \\ \alpha_y \\ \alpha_{xy} \end{bmatrix} \Delta T \, dz \qquad (5)$$

wobei $\overline{Q}_{ij}$ die bezogenen Steifigkeiten der Einzelschichten sind. Die Indizes 1 und 2 beziehen sich auf das Materialhauptachsensystem und stehen damit für längs, quer zur Faserorientierung. Index 6 steht für den Schubanteil in der Ebene. $\alpha_x$, $\alpha_y$ und $\alpha_{xy}$ sind die thermischen Längenausdehnungskoeffizienten der Einzelschicht und ergeben sich aus der Tensortransformation von $\alpha_p$ und $\alpha_q$ vom Materialhauptachsensystem in das Laminathauptachsensystem.

Bei der Ermittlung durch Versuche ist es möglich, für unterschiedliche Faseranteile jeweils den thermischen Ausdehnungskoeffizienten zu bestimmen und diesen tabellarisch oder in Form von Diagrammen grafisch darzustellen.

Die Fasern, die in dem mit Endlosfasern verstärkten Polymer enthalten sind, sind vorzugsweise ausgewählt aus Glasfasern, Kohlenstofffasern, Aramidfasern, Kaliumtitanatfasern, Mineralfasern, Naturfasern, Polymerfasern und Mischungen daraus. Besonders bevorzugt sind dabei Glasfasern und Kohlenstofffasern oder eine Mischung aus Glasfasern und Kohlenstofffasern. Die Anteile an den verschiedenen Fasern sind dabei abhängig vom Material der ersten Schicht, da die Verhältnisse der Fasern zueinander den thermischen Ausdehnungskoeffizienten beeinflussen.

Das Polymermaterial der mit Endlosfasern verstärkten Schicht kann zum Beispiel ein duroplastisches Polymer oder ein thermoplastisches Polymer sein. Geeignete duroplastische Polymere sind zum Beispiel Epoxid-Harze oder Polyurethan-Harze. Besonders bevorzugt ist das Polymermaterial jedoch ein thermoplastisches Polymer. Hierbei sind alle thermoplastischen Polymere geeignet, wobei jedoch Polyamide besonders bevorzugt sind. Geeignete Polyamide sind zum Beispiel PA 6, PA 66, PA 46, PA 6/10, PA 6T, PA 66T, PA 9T sowie PA 11 und PA 12.

Das Material der ersten Schicht ist ein Metall. Insbesondere auch bei Einsatz des Schichtverbundes als Karosseriebauteil oder auch in anderen Anwendungen, in denen eine Massereduktion der ansonsten metallischen Bauteile erzielt werden soll, ist das Material der ersten Schicht ein Metall. Üblicherweise eingesetzte Metalle sind insbesondere Stahl, Aluminium, Magnesium oder Titan.

Durch den Einsatz eines Metalls als Material für die erste Schicht werden zum Einen die Anforderungen an eine Class A Oberfläche erfüllt, zum Anderen ist es möglich, einfache und bereits erprobte Befestigungen einzusetzen, um einzelne Bauteile miteinander zu verbinden. Durch die Verbindung der ersten mit der zweiten Schicht wird bei minimaler Dichte die Steifigkeit erhöht, das Crashverhalten insbesondere bei Einsatz in einem Kraftfahrzeug wird verbessert und zudem wird ein erhöhtes akustisches Dämpfungsvermögen erhalten.

Die erste Schicht weist üblicherweise eine Dicke im Bereich von 0,2 bis 1,2 mm auf. Vorzugsweise liegt die Dicke der ersten Schicht im Bereich von 0,2 bis 0,7 mm, wobei die Dicke der ersten Schicht dabei auch abhängig vom eingesetzten Material ist. So wird zum Beispiel bei Einsatz einer reinen Stahlhaut eine Dicke von 0,2 bis 0,7 mm bevorzugt und beim Einsatz einer reinen Aluminiumhaut eine Dicke von 0,5 bis 1,0 mm.

Der Aufbau der zweiten Schicht ergibt sich dann aus dem Material der ersten Schicht und dem eingesetzten Polymermaterial und Fasermaterial der zweiten Schicht. So liegen zum Beispiel im Temperaturbereich von 0 bis 100°C die thermischen Ausdehnungskoeffizienten von Stahl bei $11,7 \cdot 10^{-6}$ 1/K, von Aluminium bei $23,5 \cdot 10^{-6}$ 1/K, von Polyamid bei $90 \cdot 10^{-6}$ 1/K bis $100 \cdot 10^{-6}$ 1/K, von E-Glasfasern bei $5,1 \cdot 10^{-6}$ 1/K parallel und senkrecht zur Faserrichtung und von Kohlenstofffasern HT bei $-0,455 \cdot 10^{-6}$ 1/K parallel zur Faserrichtung und bei $12,5 \cdot 10^{-6}$ 1/K senkrecht zur Faserrichtung.

Aufgrund des großen Unterschiedes der Ausdehnungskoeffizienten von Faser und Matrix weist eine übliche Polymermatrix einen sehr viel höhere thermische Ausdehnung auf als die Fasern. Bei einem Aufbau mit parallel ausgerichteten (unidirektional ausgerichteten) Fasern in drei Faserrichtungen hat sich gezeigt, dass in einem Temperaturbereich von 20 bis 80 °C mit einem Faseranteil von ca. 30 Vol.-% bei Einsatz von Glasfasern und Polyamid 6 als Matrixmaterial ein thermischer Ausdehnungskoeffizient erhalten wird, der dem von Aluminium entspricht. Um den thermischen Ausdehnungskoeffizienten von Stahl zu erhalten, wäre ein Faseranteil von etwa 65 Vol.-% erforderlich. Dies ist jedoch fertigungstechnisch im Grenzbereich und kann zu einem instabilen Faserverbundmaterial führen.

Demgegenüber wird bei Einsatz von Kohlenstofffasern bei einem Aufbau mit parallel ausgerichteten (unidirektional ausgerichteten) Fasern in drei Faserrichtungen in einem Temperaturbereich von 20 bis 80 °C bei einem Faseranteil von etwa 7 Vol.-% der thermische Ausdehnungskoeffizient von Aluminium erhalten und bei einem Faseranteil von etwa 15 Vol.-% der thermische Ausdehnungskoeffizient von Stahl. Dieser Faseranteil ist jedoch zu niedrig, um bei noch vertretbarer Wanddicke eine ausreichende steifigkeitserhöhende Wirkung auf das Metall zu erhalten. Ein entsprechender Schichtaufbau wäre daher nicht leichtbaugerecht.

Es zeigt sich somit, dass der thermische Ausdehnungskoeffizient von Stahl durch eine reine Verwendung von kohlenstofffaserverstärktem Polymer oder glasfaserverstärktem Polymer in einem Temperaturbereich von 20 bis 80 °C nicht sinnvoll erzielt werden kann, so dass insbesondere hier der Einsatz einer Mischung aus Glasfasern und Kohlenstofffasern zur Verstärkung des Polymermaterials erforderlich ist. Hierzu können, wie bereits vorstehend beschrieben, entweder abwechselnd Lagen mit Kohlenstofffasern und mit Glasfasern eingesetzt werden oder alternativ in einer Lage oder Einzelschicht Kohlenstofffasern und Glasfasern gemischt werden. Wenn abwechselnd Lagen mit Kohlenstofffasern und mit Glasfasern für die zweite Schicht eingesetzt werden, kann der Anteil der Kohlenstofffasern und der Glasfasern in den Lagen variiert werden, indem zum Beispiel unterschiedliche Faseranteile in den Lagen eingesetzt werden. Alternativ und bevorzugt ist es jedoch, für unterschiedliche Faseranteile am Gesamtfaseranteil zwar jeweils gleiche Faseranteile in den Lagen, jeweils bezogen auf das Faservolumen und das Matrixmaterialvolumen in einer Lage, einzusetzen, dabei für unterschiedliche Anteile am Gesamtfaseranteil aber die Lagen bzw. Einzelschichten unterschiedlich dick zu gestalten.

Weiterhin ist es möglich, bei Einsatz eines faserverstärkten Materials, dessen Wärmeausdehnungskoeffizient kleiner ist als der Wärmeausdehnungskoeffizient des Materials der ersten Schicht, zum Beispiel bei einem Glasfaseranteil von mehr als 30 Vol.-% in der zweiten Schicht und Aluminium als Material für die erste Schicht, zusätzlich unverstärkte Zwischenschichten einzusetzen, zum Beispiel in Form von unverstärkten Folien, die mit dem faserverstärkten Material der zweiten Schicht verbunden werden.

Die Verbindung der Lagen und Einzelschichten der zweiten Schicht erfolgt bei Verwendung eines thermoplastischen Polymers als Matrixmaterial vorzugsweise durch Verschweißen, indem das Matrixmaterial erwärmt wird und die Lagen und Einzelschichten und ggfls. Zwischenschichten übereinandergelegt und gepresst werden. Alternativ ist es auch möglich, die Lagen und Einzelschichten und ggfls. Zwischenschichten miteinander zu verkleben.

Die Verbindung der zweiten Schicht mit der ersten Schicht erfolgt ebenfalls zum Beispiel durch verkleben. Dies hat den Vorteil, dass zunächst das faserverstärkte Polymermaterial hergestellt und ausgehärtet wird, so dass keine Spannungen und kein Verzug im Schichtverbund durch Schwindung beim Aushärten des Polymermaterials auftreten.

Alternativ zur Verklebung ist es jedoch auch möglich, den Schichtverbund mit einem Haftvermittler direkt im Konsolidierungsprozess der zweiten Schicht miteinander zu verbinden. Bevorzugt ist jedoch das Verkleben der ersten und der zweiten Schicht. Auch bei einer Verklebung kann zur Verbesserung der Haftung der Schichten aneinander zusätzlich ein Haftvermittler eingesetzt werden.

Anforderungen an das Klebstoffsystem im Karosseriebau hängen maßgeblich davon ab, ob nach oder vor der Lackierung geklebt werden soll. Prinzipiell bieten kaltaushärtende Klebstoffe den Vorteil, dass keine hohen Eigenspannungen durch hohe Aushärtetemperaturen auftreten. Ein solcher Klebstofftyp kann aber nur sinnvoll nach der Lackierung eingesetzt werden. Grund hierfür ist zum einen, dass nur warmaushärtende Systeme ausreichende Temperaturbeständigkeit im Hinblick auf die kathodische Tauchlackierung (200 °C) bieten. Zum anderen besitzen einkomponentige heißaushärtende Klebstoffe die Fähigkeit Öl zu einem gewissen Grad zu absorbieren. Prinzipiell lassen sich Klebstoffe grob in Strukturklebungen, elastische Klebungen und abdichtende Klebungen einteilen. Diese Klassifizierung wird im Wesentlichen durch die Klebschichtdicke und die Kleberelastizität bestimmt. Als Klebstoff zur Verbindung der ersten und der zweiten Schicht eignen sich zum Beispiel Strukturkleber oder elastische Kleber, je nach Anforderung an die Oberflächenqualität des Bauteils. Ein typischer heißhärtender einkomponentiger Strukturkleber ist Delomonopox 6093 von DELO Industrie Klebstoffe GmbH & Co KGaA, ein heißhärtender kautschukbasierter einkomponentiger elastischer Kleber ist Teroson RB 5191 GB, ein heißhärtender kautschukbasierter einkomponentiger hochelastischer Unterfütterungsklebstoff ist Teroson RB 3210 H, letztere werden von Henkel AG & Co. KGaA vertrieben.

Haftvermittler können allgemein als Stoffe aufgefasst werden, die die Adhäsion zwischen der ersten Schicht und dem Klebstoff oder zwischen der ersten und der zweiten Schicht verbessern. Bei den Materialien, die als Haftvermittler eingesetzt werden können, kann man prinzipiell zwischen niedermolekularen und polymeren Haftvermittlern unterscheiden. Bei den niedermolekularen Haftvermittlern handelt es sich oft um polymerisierbare Moleküle mit Ankergruppen, die erst auf einer Oberfläche verankert und anschließend polymerisiert oder einpolymerisiert werden. Polymerbasierte Haftvermittler dagegen zeichnen sich dadurch aus, dass die funktionellen Gruppen des Haftvermittlers, die zur Anbindung wichtig sind, schon vor dem Auftragen in Makromolekülen eingebunden vorliegen. Haftvermittler aus fertigen Makromolekülen, können unter anderem in Verbindung mit fertigen Matrixpolymeren eingesetzt werden. Ein typisches Beispiel sind Schmelzklebstoffe auf Basis von Co-Polyamiden, beispielsweise erhältlich unter der Firmenbezeichnung VESTAMELT®. Geeignete polymere Haftvermittler und deren Eigenschaften sind auch in der Dissertation von Dipl.-Ing. Konrad Burlon, "Blockcopolymere als Haftvermittler für Kunststoff-Metallverbünde" TU Darmstadt, 2012 beschrieben.

Die Dicke der zweiten Schicht ist abhängig von den einzustellenden Eigenschaften des Schichtverbundes und dem eingesetzten Fasermaterial sowie dem Faseranteil. Übliche Schichtdicken der zweiten Schicht liegen vorzugsweise im Bereich von 0,5 bis 5 mm. Wenn die zweite Schicht aus mehreren Lagen und/oder Einzelschichten und/oder Zwischenschichten aufgebaut ist, ist hierbei die Summe sämtlicher Lagen und/oder Einzelschichten und/oder Zwischenschichten, aus denen die zweite Schicht aufgebaut ist, gemeint.

Beispiele

Auf Stahlbleche mit Wanddicken von 0,5 bis 0,63 mm wurden einseitig handelsübliche Tapes mit parallel ausgerichteten (unidirektionalen) Endlosfasern aufgebracht. Hierbei wurden sowohl Glasfasern enthaltende Tapes als auch Kohlenstofffasern enthaltende Tapes eingesetzt. Die Glasfasern enthaltenden Tapes haben einen Faservolumenanteil von 40 Vol.-% und eine Dicke von 0,25 mm. Die Kohlenstofffasern enthaltenden Tapes haben einen Faservolumenanteil von 49 Vol.-% und eine Dicke von 0,16 mm. Als Matrixmaterial enthalten sowohl die Glasfasern enthaltenden Tapes als auch die Kohlenstofffasern enthaltenden Tapes thermoplastisches Polyamid 6.

Es wurden jeweils Schichtverbunde aus Stahl oder Aluminium und faserverstärktem Kunststoff durch Verschrauben eines Blechs aus Stahl oder Aluminium mit einer Platte aus faserverstärktem Kunststoff hergestellt, wobei zwischen den Verschraubungen eine freie Länge von 340 mm realisiert wurde. Der so hergestellte Verbund wurde in einem Trockenschrank auf eine Temperatur von 100°C aufgeheizt und beobachtet. Hierbei waren insbesondere die Krümmungsrichtung des Verbundes und das globale Ausmaß der Krümmung von Interesse. Die Krümmungsrichtung zeigt dabei auf, welche der beiden Schichten einen größeren thermischen Ausdehnungskoeffizienten aufweist. Hierbei befindet sich auf der konvexen Seite das Material mit dem höheren thermischen Ausdehnungskoeffizienten. Durch das Ausmaß der Krümmung wird zusätzlich ein qualitativer Eindruck gewonnen, wie groß der Unterschied zwischen den thermischen Ausdehnungskoeffizienten ist. Um Verkrümmungen auf einfache Weise erfassen zu können, wird der Schichtverbund jeweils auf ein ebenes Metallprofil im Trockenschrank aufgelegt. Aus Gründen der Vergleichbarkeit wird der Schichtverbund jeweils mit der Schicht aus faserverstärktem Kunststoff auf das Metallprofil aufgelegt.

Als Vergleich wurde zunächst ein Schichtverbund mit nur in einer Richtung ausgerichteten Kohlenstofffasern hergestellt und die Krümmung sowohl parallel zur Faserrichtung als auch quer zur Faserrichtung erfasst. Quer zur Faserrichtung hat sich dabei eine wesentlich größere Ausdehnung des faserverstärkten Kunststoffs gezeigt, wohingegen parallel zur Faserrichtung die Ausdehnung des Stahlblechs größer gewesen ist.

Um eine Platte aus einem faserverstärkten Kunststoff herzustellen, deren thermischer Ausdehnungskoeffizient dem des Blechs aus Stahl oder Aluminium entspricht, wurden jeweils Lagen aus Kohlenstofffasern enthaltenden Tapes und aus Glasfasern enthaltenden Tapes hergestellt, bei denen die Tapes, d. h. die Einzelschichten, jeweils um 60° zueinander gedreht waren. Ein entsprechender Lagenaufbau wird beispielsweise mit (60/0/-60) gekennzeichnet. Für ein quasiisotropes Verhalten umfasst eine Lage dabei immer drei Einzelschichten aus dem gleichen Fasermaterial, die um jeweils 60° zueinander gedreht sind, so dass sowohl die Glasfasern als auch die Kohlenstofffasern jeweils in drei Faserrichtungen vorliegen.

In einem ersten Versuch wurde eine 2,46 mm dicke Platte aus faserverstärktem Kunststoff hergestellt, wobei jeweils die gleiche Anzahl an Lagen von kohlenstofffaserverstärkten Tapes und glasfaserverstärkten Tapes eingesetzt wurde, so dass das Schichtdickenverhältnis von Glasfasern enthaltenden Schichten zu Kohlenstofffasern enthaltenden Schichten 0,64 betrug. Die Lagen wurden in Dickenrichtung symmetrisch angeordnet. Hier hatte die Platte aus faserverstärktem Kunststoff eine geringere thermische Ausdehnung als das Stahlblech.

In einem zweiten Versuch wurde eine 3,21 mm dicke Platte aus faserverstärktem Kunststoff hergestellt, wobei diese aus einer Lage aus Kohlenstofffasern enthaltenden Tapes, dann drei Lagen aus Glasfasern enthaltenden Tapes und abschließend einer weiteren Lage aus Kohlenstofffasern enthaltenden Tapes aufgebaut war. Auch bei diesem Schichtaufbau wies die Platte aus faserverstärktem Kunststoff eine geringere thermische Ausdehnung auf als das Stahlblech.

In einem dritten Versuch wurde eine 3,96 mm dicke Platte aus zwei Lagen mit Kohlenstofffasern verstärkten Tapes und vier Lagen aus Glasfasern enthaltenden Tapes hergestellt, wiederum in Dickenrichtung symmetrisch angeordnet. Wie im vorherigen Versuch ergab sich auch hier eine im Vergleich zum Stahlblech geringere thermische Ausdehnung.

In einem vierten Versuch wurde ein Aufbau des faserverstärkten Kunststoffs wie im dritten Versuch hergestellt, wobei zusätzlich noch eine Zwischenschicht aus einer 0,1 mm dicken Folie aus Polyamid 6 ergänzt wurde. Der Aufbau aus jeweils zwei Lagen Kohlenstofffasern enthaltenden Tapes, vier Lagen Glasfasern enthaltenden Tapes und einer Zwischenschicht Polyamidfolie ergibt eine Dicke der Platte aus faserverstärktem Kunststoff von 4,16 mm. Diese Platte wies dann den gleichen thermischen Ausdehnungskoeffizienten in einem Temperaturbereich von 20 bis 80 °C auf wie das Stahlblech, was sich dadurch gezeigt hat, dass weder das Stahlblech noch die Platte aus faserverstärktem Kunststoff eine Krümmung aufgewiesen haben.

Durch das Stapeln der Lagen und Einzelschichten mit unterschiedlichen Fasermaterialien und gegebenenfalls Zwischenschichten ohne Faserverstärkung lassen sich somit faserverstärkte Kunststoffe erhalten, deren thermischer Ausdehnungskoeffizient dem des Metalls der ersten Schicht entspricht, so dass ein Schichtverbund hergestellt werden kann, bei dem auch bei Erwärmung keine Spannungen durch unterschiedliche thermische Ausdehnung der ersten und zweiten Schicht auftreten.

Auch im ersten bis dritten Versuch war die Krümmung des Stahlblechs so gering, dass hier ein maßhaltiger formstabiler Schichtverbund hätte realisiert werden können.

Zusätzlich zu den Versuchen mit einem Stahlblech wurden auch Versuche mit einem Aluminiumblech durchgeführt.

Hier wurde in einem fünften Versuch eine Platte aus einem faserverstärkten Kunststoff, der nur Glasfasern enthalten hat, hergestellt, wobei die Platte eine Dicke von 1,5 mm aufwies. Die Platte wurde aus zwei symmetrisch zu einander aufeinandergestapelten Lagen, die jeweils in drei Faserrichtungen übereinanderliegende Tapes mit einem Winkel von jeweils 60° enthielten, aufgebaut. Die so hergestellte Platte wies einen geringeren thermischen Ausdehnungskoeffizienten auf als das Aluminiumblech.

In einem sechsten Versuch wurde eine Platte mit einer Dicke von 2 mm hergestellt, aufgebaut aus sich wiederholenden Lagen mit folgender Reihenfolge: Eine Lage, die in drei Faserrichtungen übereinanderliegende Tapes mit einem Winkel von jeweils 60° zueinander enthielt, eine Zwischenschicht aus einer 0,5 mm dicken Polyamidfolie ohne Fasern und eine weitere Lage aus glasfaserverstärkten Tapes. Diese Platte wies die gleiche thermische Ausdehnung in einem Temperaturbereich von 20 bis 80 °C auf wie die Aluminiumplatte, erkennbar daran, dass weder die Aluminiumplatte noch die Platte aus faserverstärktem Kunststoff eine Krümmung aufwiesen.

Auch hier zeigt sich, dass durch entsprechenden Schichtaufbau ein thermischer Ausdehnungskoeffizient erhalten werden kann, der dem des Aluminiumblechs entspricht.

Zusätzlich zu den Versuchen wurde auch jeweils der thermische Ausdehnungskoeffizient entsprechend der vorstehenden Berechnungsgrundlage nach Gleichung 1 bis 5 berechnet. Hier hat sich gezeigt, dass die berechneten und die gemessenen Ausdehnungskoeffizienten qualitativ übereinstimmen.

**Patentansprüche**

1. Schichtverbund, aufgebaut aus einer ersten Schicht aus einem ersten Material und einer zweiten Schicht aus einem mit Endlosfasern verstärkten Polymer, wobei die erste Schicht und die zweite Schicht flächig miteinander verbunden sind, **dadurch gekennzeichnet, dass** die Endlosfasern in der zweiten Schicht in mindestens drei Faserrichtungen ausgerichtet sind, wobei die drei Faserrichtungen in einer Ebene liegen, die parallel zur ersten Schicht ausgerichtet ist, und der Faseranteil so eingestellt ist, dass der thermische Ausdehnungskoeffizient der zweiten Schicht dem thermischen Ausdehnungskoeffizienten der ersten Schicht entspricht, wobei das Material der ersten Schicht ein Metall ist, das mit Endlosfasern verstärkte Polymer einen Gesamtfaseranteil im Bereich von 1 bis 70 Vol.-% aufweist und wobei

   i) die zweite Schicht aus mehreren Einzelschichten aus einem faserverstärkten Polymer, die jeweils zueinander gedreht sind, aufgebaut ist, oder
   ii) die zweite Schicht mehrere Lagen mit Endlosfasern enthält und wobei die Endlosfasern innerhalb einer Lage in mehreren zueinander gedrehten Faserrichtungen vorliegen.

2. Schichtverbund gemäß Anspruch 1, **dadurch gekennzeichnet, dass** die Menge an Fasern in jeder der Faserrichtungen um weniger als 5 Vol.-% von der Menge an Fasern in den anderen Faserrichtungen abweicht.

3. Schichtverbund gemäß Anspruch 1 oder 2, **dadurch gekennzeichnet, dass** die Orientierung der Fasern in jeder der Faserrichtungen um weniger als 5° von der vorgesehenen Orientierung der Fasern abweicht.

4. Schichtverbund gemäß einem der Ansprüche 1 bis 3, **dadurch gekennzeichnet, dass** die Winkel zwischen den vorgesehenen Orientierungen der Faserrichtungen jeweils gleich groß sind.

5. Schichtverbund gemäß einem der Ansprüche 1 bis 4, **dadurch gekennzeichnet, dass** bei Einsatz verschiedener Fasermaterialien der Faseranteil eines Fasermaterials in jeder der Faserrichtungen um nicht mehr als 5 Vol.-% vom Faseranteil dieses Fasermaterials der anderen Faserrichtungen abweicht.

6. Schichtverbund gemäß einem der Ansprüche 1 bis 5, **dadurch gekennzeichnet, dass** die Fasern als Gewebe oder als parallel ausgerichtete Endlosfasern im mit Endlosfasern verstärkten Polymer enthalten sind.

7. Schichtverbund gemäß Anspruch 1 Alternative i), **dadurch gekennzeichnet, dass** die zweite Schicht zusätzlich eine Zwischenschicht aus einem nicht faserverstärkten Polymer umfasst.

8. Schichtverbund gemäß einem der Ansprüche 1 bis 7, **dadurch gekennzeichnet, dass** das Polymermaterial der mit Endlosfasern verstärkten Schicht ausgewählt ist aus duroplastischen Polymeren und thermoplastischen Polymeren.

9. Schichtverbund gemäß einem der Ansprüche 1 bis 8, **dadurch gekennzeichnet, dass** die Fasern ausgewählt sind aus Glasfasern, Kohlenstofffasern, Aramidfasern, Kaliumtitanatfasern, Mineralfasern, Naturfasern, Polymerfasern und Mischungen daraus.

10. Schichtverbund gemäß einem der Ansprüche 1 bis 9, **dadurch gekennzeichnet, dass** bei Verwendung mehrerer Fasermaterialien der Anteil an jedem Fasermaterial in jeder der Faserrichtungen gleich groß ist.

11. Schichtverbund gemäß einem der Ansprüche 1 bis 10, **dadurch gekennzeichnet, dass** das Metall ausgewählt ist aus Stahl, Aluminium, Magnesium oder Titan.

12. Schichtverbund gemäß einem der Ansprüche 1 bis 11, **dadurch gekennzeichnet, dass** die erste Schicht eine Dicke im Bereich von 0,2 bis 1,2 mm und/oder die zweite Schicht eine Dicke im Bereich von 0,5 bis 5 mm aufweist.

**Claims**

1. A layer composite constructed from a first layer of a first material and a second layer of a polymer reinforced with endless fibers, wherein the first layer and the second layer are joined to one another face to face, wherein the endless fibers in the second layer are aligned in at least three fiber directions, wherein the three fiber directions are in a plane aligned parallel to the first layer and the fiber content is adjusted such that the coefficient of thermal expansion of the second layer corresponds to the coefficient of thermal expansion of the first layer, wherein the material of the first layer is a metal, the polymer reinforced with endless fibers has a total fiber content in the range from 1 to 70 vol% and wherein

>  i) the second layer is constructed from two or more individual layers of a fiber-reinforced polymer that are each rotated relative to one another, or
>  ii) the second layer contains two or more plies comprising endless fibers and wherein the endless fibers within a ply are present in two or more fiber directions rotated relative to one another.

2. The layer composite according to claim 1, wherein the amount of fibers in each of the fiber directions differs from the amount of fibers in the other fiber directions by less than 5 vol%.

3. The layer composite according to claim 1 or 2, wherein the orientation of the fibers in each of the fiber directions differs from the intended orientation of the fibers by less than 5°.

4. The layer composite according to claim 1 or 2, wherein the angles between the intended orientations of the fiber directions are in each case identical.

5. The layer composite according to any of claims 1 to 4, wherein when using different fiber materials the fiber content of a fiber material in each of the fiber directions differs from the fiber content of this fiber material in the other fiber directions by not more than 5 vol%.

6. The layer composite according to any of claims 1 to 5, wherein the fibers are present in the polymer reinforced with endless fibers as a woven fabric or as parallel endless fibers.

7. The layer composite according to claim 1, alternative i), wherein the second layer additionally comprises an interlayer of a non-fiber-reinforced polymer.

8. The layer composite according to any of claims 1 to 7, wherein the polymer material of the layer reinforced with endless fibers is selected from thermosetting polymers and thermoplastic polymers.

9. The layer composite according to any of claims 1 to 8, wherein the fibers are selected from glass fibers, carbon fibers, aramid fibers, potassium titanate fibers, mineral fibers, natural fibers, polymer fibers and mixtures thereof.

10. The layer composite according to any of claims 1 to 9, wherein when using two or more fiber materials the proportion of each fiber material in each of the fiber directions is identical.

11. The layer composite according to any of claims 1 to 10, wherein the metal is selected from steel, aluminum, magnesium or titanium.

12. The layer composite according to any of claims 1 to 11, wherein the first layer has a thickness in the range from 0.2 to 1.2 mm and/or the second layer has a thickness in the range from 0.5 to 5 mm.

**Revendications**

1. Composite stratifié, formé par une première couche en un premier matériau et une deuxième couche en un polymère renforcé par des fibres continues, la première couche et la deuxième couche étant reliées l'une à l'autre en surface, **caractérisé en ce que** les fibres continues dans la deuxième couche sont dirigées dans au moins trois directions de fibres, les trois directions de fibres se situant dans un plan, qui est dirigé parallèlement à la première couche, et la proportion de fibres est ajustée de telle sorte que le coefficient de dilatation thermique de la deuxième couche corresponde au coefficient de dilatation thermique de la première couche, le matériau de la première couche étant un métal, le polymère renforcé par des fibres continues présentant une proportion totale de fibres dans la plage allant de 1 à 70 % en volume, et

>  i) la deuxième couche étant formée par plusieurs couches individuelles en un polymère renforcé par des fibres, qui sont chacune tournées les unes par rapport aux autres, ou

ii) la deuxième couche contenant plusieurs strates munies de fibres continues et les fibres continues au sein d'une strate se présentant dans plusieurs directions de fibres tournées les unes par rapport aux autres.

2. Composite stratifié selon la revendication 1, **caractérisé en ce que** la quantité de fibres dans chacune des directions de fibres diffère de moins de 5 % en volume de la quantité de fibres dans les autres directions de fibres.

3. Composite stratifié selon la revendication 1 ou 2, **caractérisé en ce que** l'orientation des fibres dans chacune des directions de fibres diffère de moins de 5° de l'orientation prévue des fibres.

4. Composite stratifié selon l'une quelconque des revendications 1 à 3, **caractérisé en ce que** les angles entre les orientations prévues des directions de fibres sont à chaque fois identiques.

5. Composite stratifié selon l'une quelconque des revendications 1 à 4, **caractérisé en ce que** lors de l'usage de divers matériaux fibreux, la proportion de fibres d'un matériau fibreux dans chacune des directions de fibres ne diffère pas de plus de 5 % en volume de la proportion de fibres de ce matériau fibreux des autres directions de fibres.

6. Composite stratifié selon l'une quelconque des revendications 1 à 5, **caractérisé en ce que** les fibres sont contenues sous la forme d'un tissu ou sous la forme de fibres continues dirigées parallèlement dans le polymère renforcé par des fibres continues.

7. Composite stratifié selon la revendication 1, variante i), **caractérisé en ce que** la deuxième couche comporte en outre une couche intermédiaire en un polymère non renforcé par des fibres.

8. Composite stratifié selon l'une quelconque des revendications 1 à 7, **caractérisé en ce que** le matériau polymère de la couche renforcée par des fibres continues est choisi parmi les polymères duroplastiques et les polymères thermoplastiques.

9. Composite stratifié selon l'une quelconque des revendications 1 à 8, **caractérisé en ce que** les fibres sont choisies parmi les fibres de verre, les fibres de carbone, les fibres d'aramide, les fibres de titanate de potassium, les fibres minérales, les fibres naturelles, les fibres polymères et les mélanges de celles-ci.

10. Composite stratifié selon l'une quelconque des revendications 1 à 9, **caractérisé en ce que** lors de l'utilisation de plusieurs matériaux fibreux, la proportion de chaque matériau fibreux dans chacune des directions de fibres est identique.

11. Composite stratifié selon l'une quelconque des revendications 1 à 10, **caractérisé en ce que** le métal est choisi parmi l'acier, l'aluminium, le magnésium ou le titane.

12. Composite stratifié selon l'une quelconque des revendications 1 à 11, **caractérisé en ce que** la première couche présente une épaisseur dans la plage allant de 0,2 à 1,2 mm et/ou la deuxième couche présente une épaisseur dans la plage allant de 0,5 à 5 mm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006058601 A
- DE 102010014541 A
- DE 3818478 A
- DE 102011114362 A1

**In der Beschreibung aufgeführte Nicht-Patentliteratur**

- **TSAI, S. ; HAHN, H. T.** Introduction to composite Materials. *Technomic Publishing Company, Westport, Connecticut,* 1980